# EUROPEAN PATENT SPECIFICATION

(11) **EP 0 824 886 B1**
(45) Date of publication and mention of the grant of the patent: **17.05.2000**
(21) Application number: 97202470.7
(22) Date of filing: 11.08.1997
(51) Int. Cl.: A47J 37/07

(54) **Barbecue apparatus**
Barbecue
Barbecue

(30) Priority: 22.08.1996 BE 9600716
(43) Date of publication of application: 25.02.1998
(73) Proprietor: Saey N.V., 8501 Kortrijk/Heule (BE)
(72) Inventor: Saye, Stefaan, 8500 Kortrijk (BE)
(74) Representative: Leherte, Georges M.L.M., Dr.

(56) References cited:
- BE-A- 901 452
- US-A- 3 209 743
- US-A- 3 841 299

## Description

The invention relates to barbecue apparatuses, more especially barbecue apparatuses that work with fuel in solid form.

Such barbecue apparatuses are generally known.
They are especially for private use, are often made portable or moveable and comprise a fireplace for solid fuel such as for example charcoal, briquettes, and the like.
One of the problems with those types of appliances is namely the ignition of the solid fuel.
Various solutions have been put forward for that purpose such as ignition fluids (which have namely proved to be very dangerous with a second attempt at lighting), electrical provisions (which often prove to be either too costly or function insufficiently), fire-lighters for use in the fireplace, on the basis of petroleum derivatives or otherwise (which give off an unpleasant smell and/or provide an insufficiently homogeneous ignition) and finally also ignition devices below the fireplace.
More especially relating to this latter approach a number of developments are known from patent literature.

Hence the American patents 3,209,743 and 3,841,299 and the Belgian patent 901.452 describe ignition provisions that are mounted under the fireplace and that generally use available materials (such as especially newspaper) for the ignition.
Thus the barbecue device according to the Belgian patent 901.452 comprises a fireplace for fuel in solid form, and connecting to the fireplace a tubular stand that is provided with a draught opening, and an ignition device provided in the tubular stand for the fuel in solid form placed in the fireplace, whereby paper can be inserted into the ignition device and lit via the draught opening. Although such a barbecue solves certain problems of the apparatuses known in the past there are nevertheless still disadvantages. Thus the insertion of the paper and lighting it is not particularly easy and the stability and safety are not optimal.

The object of this invention is to provide a barbecue device which avoids these disadvantages and improves the stability and safety in use.

For that purpose the barbecue apparatus according to the invention consists of a device which comprises a fireplace for fuel in solid form, and connecting to the fireplace a tubular stand that is provided with a draught opening, and an ignition device provided in the tubular stand for the fuel in solid form placed in the fireplace, consisting of an air-permeable holder to be suspended in the tubular stand for the ignition material for the fuel in solid form.

According to a further characteristic of the invention a reservoir can be provided in the tubular stand for liquid fire extinguishing material such as in particular water.

In a specific embodiment of this further characteristic the air-permeable holder according to the invention can be provided underneath with a reservoir for liquid fire extinguishing material and/or for collecting ashes.

According to the invention the reservoir with the fire extinguishing material is preferably so provided in the tubular stand that it therefore contributes to a lowering of the centre of gravity of the apparatus.

Furthermore according to yet another additional characteristic of the invention a removable support grating for the fuel in solid form can be provided in the fireplace.
This removable support grating is preferably provided with griping points, such as for example handles, so that the aforementioned grating can easily be removed and replaced with the charcoal.
Because of this arrangement, if the lighting operation has not been entirely successful, the procedure can very easily be repeated, without it being necessary to empty out the charcoal.

According to a preferred embodiment of the invention the fireplace can be so provided with a closing cover, that by virtue of the relative centres of gravity of the whole fireplace plus stand on the one hand and of the closing cover on the other hand, by virtue of the relative positions of the points of suspension on the cover and on the fire place, and by virtue of the shape of the fireplace and/or of the cover, in case of unexpected falling over the barbecue apparatus tips over in the direction of the cover, and the fuel in solid form from the fireplace mainly lands in the cover.
This cover can moreover in open position at the same time serve as an additional wind-break for the fireplace of the barbecue.

Also according to the invention the fireplace can be provided with such points of suspension that the gridirons for the food to be grilled can according to choice be mounted at more than one different heights in the fireplace.

In a specific embodiment of the invention the ignition device consisting of an air-permeable holder for ignition material is preferably a perforated cylinder that fits into the tubular stand; according to the most preferred embodiment of the barbecue apparatus according to the invention the tubular stand and the perforated tubular holder of the ignition device are both of corresponding tubular form.

Further distinctive features and characteristics of the invention will be clarified in the following description of a specific embodiment of the invention as represented in the attached drawings.
It should be noted that this embodiment is only given by way of example and implies no restriction in the general scope of the invention as that appears from the above description and from the claims at the end of this text.

In the attached drawings:
figure 1 is an exploded view in perspective of the principal parts of a barbecue apparatus according to the invention;
figure 2 is a cross-section of a somewhat different embodiment of the barbecue apparatus from figure 1;
figure 3 is an enlarged detail representation of the ignition device and the fire extinguisher reservoir of the barbecue apparatus according to figure 2.

In the figures the barbecue apparatus as a whole is indicated by the reference number (1); the barbecue apparatus comprises a tubular stand (2) in the form of a cylindrical tube, with a hollow foot (3).

The foot (3) is point symmetric (figure of revolution) and so designed that the required stability is ensured; the foot is hollow underneath in order to be stable in case of the presence of small unevennesses. The connection to the cylindrical tube occurs by providing a small deepening with screw holes on the inside (underside) and is provided with drainage holes, which at the same time serve as access to the attachment elements.

The tubular stand (2) - the cylindrical tube - is spot-welded and provided with two air supply holes (4) in front, so that in case of possible falling over water does not run out through (opened) air supply holes, and provided with holes for connection to the foot and the pan (fireplace (5). The air supply holes (4) can be regulated casu quo closed via handle (6) operated slide (not shown).

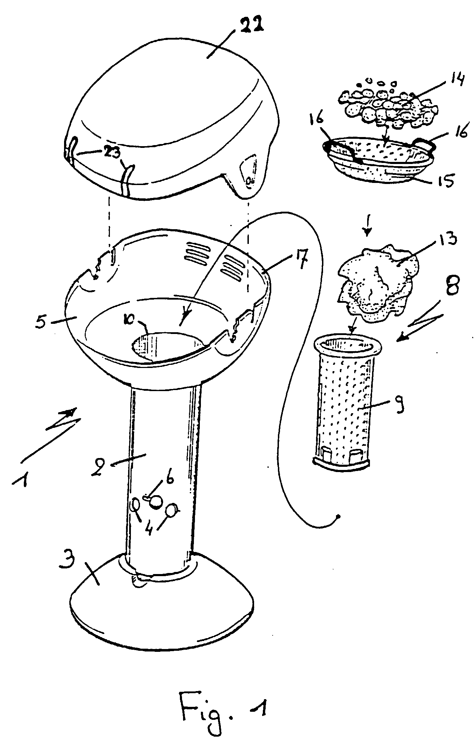

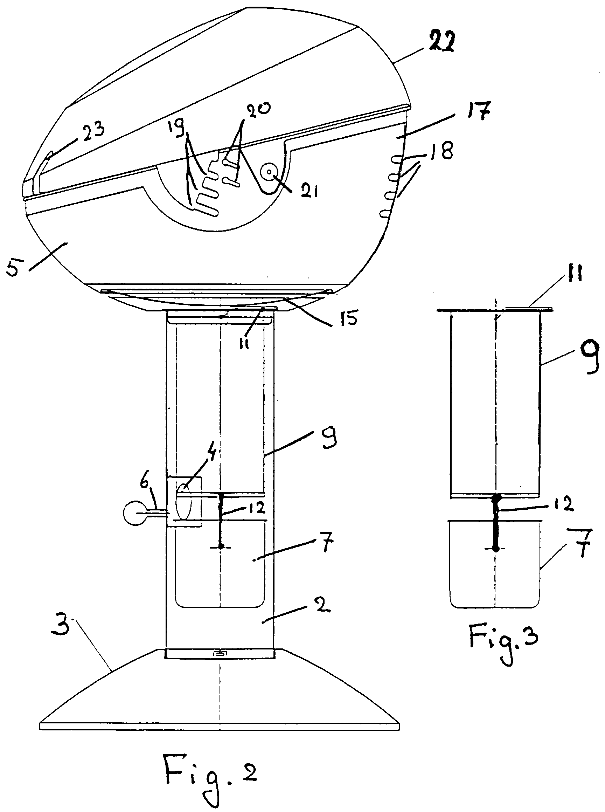

Below in the cylindrical tube (2) a water reservoir is provided. That water reservoir can take the form of a glass or plastic pot, below in the cylindrical tube, with possibly an elongated opening (punch-out) in the tube as a type of gauge glass (outer diameter = inner diameter of the pole). The weight of the water reservoir improves the stability and extinguishes/cools the coals were the barbecue nevertheless to fall. In case of falling over the system also forms a pool of water on the ground round the pan, through which ignition of dry grass is avoided.
The capacity is preferably at least two litres in order to obtain an acceptable effect.
The water reservoir can however also be formed by an ashpan (7), below the ignition device which is indicated in its entirety by the reference number (8), as shown in figure 1.
The ignition device (8) - the so-called "Quick-start" mechanism - consists of a perforated stainless steel cylinder suspended in the tubular stand (2), resting on the shoulder (10) of the pan (5). The perforated cylinder (9) functions as basket for the ignition medium, namely two sheets of newspaper (13). As shown in figures 2 and 3, this cylinder can also be provided with a handle (11) on top - see in particular fig. 3 - (stainless steel handle, locked in one of the holes by spring force) and with a second stainless steel handle (12) below which on the one hand serves as suspension of the ashpan, on the other hand serves as end stop for the ignition zone (the two sheets of newspaper cannot be pushed farther down). The perforated cylinder promotes the complete burning of the newspaper through a more efficient flow of air from the air inlet to the burning newspaper through the perforated basket, and this over the whole length of the cylinder (i.e. for the entire mass of newspaper, and not only at the bottom).
Because of this the burning of the newspaper occurs considerably more cleanly and achieves a predictable progress, irrespective of the weather conditions. A possibly unburned piece of newspaper at the bottom can because of this not influence the further burning. This design of the ignition system promotes the ignition of the coals through a guaranteed supply of fresh air in the concentric zone. Choking the passage of air to the coals with pieces of newspaper is excluded because of this.
Furthermore the chimney effect is clearly increased and occurs as from the burning of the first pieces of newspaper.
The temperature of the tube during ignition remains significantly lower with the ignition system, through which the tube is better protected against the effects of high temperatures and through which the loss of energy because of heat emission of the tube to the environment decreases.
Because of this the efficiency of the system is increased.
The ignition system further provides a controlled burning of the newspaper, both with calm weather and windy surroundings.

The support grating for the solid fuel (charcoal, briquettes, etc.) (14) - the so-called base grating - indicated by the reference number (15), is made of steel, enamelled steel or stainless steel, and is perforated and wok-shaped. A wire-shaped handle with two grips (16) on the outer edge simplifies a possible second attempt. The wire-shaped handle is clamped between rolled over edges of the perforated steel.
Because of the shape and the size of the base grating there is an optimum flow of air under a large amount of coals, through which the initial ignition occurs quicker.
Through the shape and the distance to the pan the temperature of the pan under the central point of the fire remains lower.

The pan - fireplace - (5) is produced with an integrated wind-break (17) at the back provided with air vents (18), and provided with adjustment points (19) for the gridiron(s) - not shown -, with points of suspension (20) for a spit - also not represented - and with connection points (21) for the cover (22).

The cover (22) is opened by rotating backwards round two connection points on the side. In open position it serves as extra wind-break. It can be closed in order to achieve an oven function and/or in case of severe wind conditions. The cover (22) catches the coals were the barbecue to fall over. Slots (23) are furthermore provided in the cover (22) in order that the gridiron may be moved in height with the cover closed, by means of handles that extend out of the grilling compartment.

By experience it has been determined that with this barbecue apparatus according to the invention significantly lower temperatures were measured than with usual barbecue apparatuses, both on the surface of the pan (5) and on the surface of the stand (2), and this owing to the concept of the new ignition system (8) and the new base grating (15) according to the invention.

The new base grating provides a distance between the hot coals and the pan. Because of this the temperature zone is lowered at the most critical point of the pan. The new ignition system provides a controlled rise in temperature of the tube during the ignition phase.

## Claims

1. Barbecue apparatus comprising a fireplace for fuel in solid form, and connecting to the fireplace a tubular stand that is provided with (a) draught opening(s), and an ignition device provided in the tubular stand for the fuel in solid form placed in the fireplace, **characterised in that** the ignition device consists of a removable air-permeable holder to be suspended in the tubular stand for ignition material for the fuel in solid form.

2. Barbecue apparatus according to claim 1, **characterised in that** a reservoir is provided in the tubular stand for liquid fire extinguishing material.

3. Barbecue apparatus according to claim 2, **characterised in that** the ignition device consisting of an air-permeable holder is provided underneath with a reservoir for liquid fire extinguishing material and/or for collecting ashes.

4. Barbecue apparatus according to claim 2 or 3, **characterised in that** the placing or suspension of the reservoir with fire extinguishing material contributes to a lowering of the centre of gravity of the apparatus.

5. Barbecue apparatus according to one of the preceding claims, **characterised in that** a removable support grating for the fuel in solid form is provided in the fireplace.

6. Barbecue apparatus according to claim 5, **characterised in that** the removable support grating is provided with such gripping points.

7. Barbecue apparatus according to one of the preceding claims, **characterised in that** the fireplace is so provided with a closing cover that by virtue of the relative centres of gravity of the whole fireplace plus stand on the one hand and of the closing cover on the other hand, by virtue of the relative positions of the points of suspension on the cover and on the fire place, and by virtue of the shape of the fireplace and/or of the cover, in case of unexpected falling over the barbecue apparatus tips over in the direction of the cover and the fuel in solid form from the fireplace mainly lands in the cover.

8. Barbecue apparatus according to one of the preceding claims, **characterised in that** the fireplace is provided with such points of suspension that the gridirons for the food to be grilled can according to choice be mounted at more than one different heights in the fireplace.

9. Barbecue apparatus according to one of the preceding claims, **characterised in that** the ignition device consisting of an air-permeable holder for ignition material consists of a perforated cylinder that fits into the tubular stand.

10. Barbecue apparatus according to claim 9, **characterised in that** the tubular stand and the perforated tubular holder of the ignition device are cylindrical.

## Patentansprüche

1. Barbecuegerät, bestehend aus einem Feuerraum für Brennstoff in fester Form und in Verbindung mit dem Feuerraum einem röhrenförmigen Ständer, der mit (einer) Zugöffnung(en) versehen ist und einem, im röhrenförmigen Ständer vorgesehenen Zündvorrichtung für den Brennstoff in fester Form, der sich im Feuerraum befindet, **dadurch gekennzeichnet,** dass die Zündvorrichtung aus einem herausnehmbaren luftdurchlässigen Halter besteht zum Aufhängen im röhrenförmigen Ständer für Zündmaterial für den Brennstoff in fester Form.

2. Barbecuegerät gemäß Anspruch 1, **dadurch gekennzeichnet,** dass im röhrenförmigen Ständer ein Behälter vorgesehen ist für Feuerlöschmaterial.

3. Barbecuegerät gemäß Anspruch 1, **dadurch gekennzeichnet,** dass die Zündvorrichtung, besteht aus einem luftdurchlässigen Halter, unten mit einem Behälter für flüssiges Feuerlöschmaterial und/oder zum Auffangen der Asche versehen ist.

4. Barbecuegerät gemäß Anspruch 2 oder 3, **dadurch gekennzeichnet,** dass die Anordnung oder Aufhängung des Behälters mit Feuerlöschmaterial zu einer Senkung des Schwerpunkts des Geräts beiträgt.

5. Barbecuegerät gemäß einem der vorangehenden Ansprüche, **dadurch gekennzeichnet,** dass ein herausnehmbares Unterstützungsgitter für den Brennstoff in fester Form im Feuerraum vorgesehen ist.

6. Barbecuegerät gemäß Anspruch 5, **dadurch gekennzeichnet,** dass das herausnehmbare Unterstützungsgitter mit derartigen Griffpunkten versehen ist.

7. Barbecuegerät gemäß einem der vorangehenden Ansprüche, **dadurch gekennzeichnet,** dass der Feuerraum also auf derartige Art und Weise mit einem Verschlussdeckel versehen ist, dass auf Grund der jeweiligen Schwerpunkte des gesamten Feuerraums mit dem Ständer einerseits und des Verschlussdeckels andererseits, auf Grund der jeweiligen Lagen der Aufhängepunkte auf dem Deckel und auf dem Feuerraum, und auf Grund der Gestaltung des Feuerraums und/oder des Deckels, bei einem unerwarteten Umstürzen, das Barbecuegerät in die Richtung des Deckels umkippt und der Brennstoff in fester Form aus dem Feuerraum hauptsächlich im Deckel landet.

8. Barbecuegerät gemäß einem der vorangehenden Ansprüche, **dadurch gekennzeichnet,** dass der Feuerraum mit derartigen Aufhängepunkten versehen ist, dass die Gitterstäbe für die zu grillenden Speisen nach Wunsch in verschieden Höhen im Feuerraum aufgestellt werden können.

9. Barbecuegerät gemäß einem der vorangehenden Ansprüche, **dadurch gekennzeichnet,** dass die Zündvorrichtung, bestehend aus einem luftdurchlässigen Halter für Zündmaterial, aus einem perforierten Zylinder besteht, der in den röhrenförmigen Ständer passt.

10. Barbecuegerät gemäß Anspruch 9, **dadurch gekennzeichnet,** dass der röhrenförmige Ständer und der perforierte röhrenförmige Halter der Zündvorrichtung zylindrisch sind.

## Revendications

1. Barbecue comprenant un âtre pour un combustible sous forme solide, et connecté à l'âtre, un pied tubulaire qui est muni de (a) des ouvertures de tirage, et un dispositif d'allumage placé dans le pied tubulaire pour le combustible sous forme solide placé dans l'âtre, caractérisé en ce que le dispositif d'allumage consiste en un support perméable à l'air, amovible, à suspendre dans le pied tubulaire pour un matériau d'allumage pour le combustible sous forme solide.

2. Barbecue suivant la revendication 1, caractérisé en ce qu'un réservoir est introduit dans le pied tubulaire pour un matériau liquide d'extinction.

3. Barbecue suivant la revendication 2, caractérisé en ce que le dispositif d'allumage consistant en un support perméable à l'air est placé en dessous, avec un réservoir pour un matériau liquide d'extinction et/ou pour collecter les cendres.

4. Barbecue suivant la revendication 2 ou 3, caractérisé en ce que l'introduction ou la suspension du réservoir avec le matériau d'extinction contribue à abaisser le centre de gravité de l'appareil.

5. Barbecue suivant l'une quelconque des revendications précédentes, caractérisé en ce qu'une grille support amovible pour le combustible sous forme solide est introduite dans l'âtre.

6. Barbecue suivant la revendication 5, caractérisé en ce que la grille de support amovible est munie de points de prise.

7. Barbecue suivant l'une quelconque des revendications précédentes, caractérisé en ce que l'âtre est muni d'une couvercle de fermeture, de sorte que, en vertu des centres de gravité relatifs de l'ensemble âtre plus pied, d'une part, et du couvercle de fermeture, d'autre part, en vertu des positions relatives des points de fixation sur le couvercle et sur l'âtre, et en vertu de la forme de l'âtre et/ou du couvercle, dans la cas d'une chute inattendue, le barbecue bascule dans la direction du couvercle et le combustible sous forme solide de l'âtre reste essentiellement dans le couvercle.

8. Barbecue suivant l'une quelconque des revendications précédentes, caractérisé en ce que l'âtre est muni de points de fixation tels que les aliments à griller peuvent, suivant le choix, être montés à différentes hauteurs dans l'âtre.

9. Barbecue suivant l'une quelconque des revendications précédentes, caractérisé en ce que le dispositif d'allumage consiste en un support perméable à l'air pour le matériau d'allumage, consistant en un cylindre perforé qui s'ajuste dans le pied tubulaire.

10. Barbecue suivant la revendication 9, caractérisé en ce que le pied tubulaire et le support tubulaire perforé du dispositif d'allumage sont cylindriques.
